# NEW EUROPEAN PATENT SPECIFICATION

(11) **EP 2 468 483 B2**
(45) Date of publication and mention of the opposition decision: **17.06.2020**
(45) Mention of the grant of the patent: 05.04.2017
(21) Application number: 11190651.7
(22) Date of filing: 24.11.2011
(51) Int. Cl.: B29C 70/34, C08J 5/24, C08J 7/02, B29B 11/16

(54) **Method of debulking a fiber preform**
Verfahren zur Verdichtung einer Faservorform
Procédé de réduction de volume d'une préforme de fibre

(30) Priority: 21.12.2010 US 974797
(43) Date of publication of application: 27.06.2012
(73) Proprietor: Raytheon Technologies Corporation, Farmington, CT 06032 (US)
(72) Inventor: Hertel, Christopher J., Wethersfield, CT Connecticut 06109 (US)
(74) Representative: Dehns

(56) References cited:
- EP-A1- 1 777 063
- EP-A2- 0 277 456
- EP-A2- 1 235 672
- US-A- 2 398 831
- US-A- 4 269 953
- US-A1- 2005 112 321
- Dirk Heider ET AL: "VARTM Variability and Substantiation", Center for Composite Materials, University of Delaware, Newark, DE 19716, 12 May 2010 (2010-05-12), pages 1-12, XP55020621, Retrieved from the Internet: URL:http://depts.washington.edu/amtas/even ts/jams_10/pap10-Heider.pdf [retrieved on 2012-02-29]

## Description

### BACKGROUND

This disclosure relates to a method used in making a composite structure, such as those manufactured by the process of resin transfer molding.

Resin transfer molding is known and used to manufacture composite articles. In a typical resin transfer molding process, a manufacturer fabricates a fiber preform by laying up plies of two-dimensional fiber sheets in a stack. To bind the dry fiber plies together, the typical manufacturer deposits a dry resin powder or applies a resin solution between the plies during the lay-up process and then compresses the stack at an elevated temperature to melt the powder. Upon cooling, the binder solidifies and holds the plies together in a compressed state. The process of reducing the size of the preform is generally known as debulking and is used to produce a preform of suitable size with a desirable volume of fibers. The technique of using the dry resin powder between the plies is not applicable to many woven fiber performs, including three-dimensional woven performs, because there are no separable plies between which the powder can be deposited.

Various processes using fiber plies are disclosed in EP-A-277456 and US 2005/0112321 A1, for example.

### SUMMARY

The present invention provides a method of debulking a three-dimensional fiber preform, as set forth in claim 1.

A solvent may be infiltrated into the preform to distribute a tackifier material therein. The solvent is then removed and the dried preform is compressed to a smaller size such that, upon removal of the compression, the tackifier material causes the preform to substantially remain at the smaller size.

### BRIEF DESCRIPTION OF THE DRAWINGS

The various features and advantages of the disclosed examples will become apparent to those skilled in the art from the following detailed description. The drawings that accompany the detailed description can be briefly described as follows.

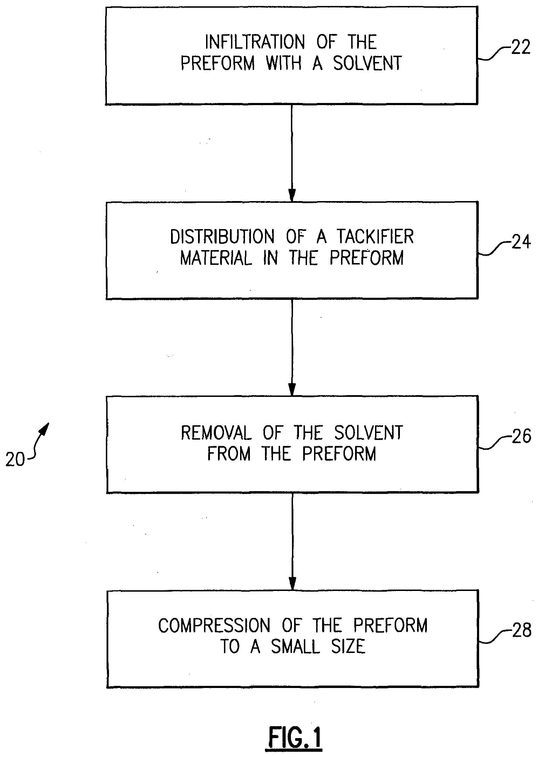

Figure 1 illustrates an example method of debulking a fiber preform.

### DETAILED DESCRIPTION OF THE PREFERRED EMBODIMENT

The examples disclosed herein are applicable to the debulking of a three-dimensional fiber preform (hereafter "preform" is used to refer to a three-dimensional fiber preform structure). The preform includes fibers that are interwoven to form fiber sheets that are bundled to one another by transverse fibers to provide the three-dimensional fiber network of the preform. The fibers may be carbon fibers but the disclosed examples may be applied to other kinds of fibers as swell.

The examples disclosed herein may be utilized to debulk the preform from a first size to a second, smaller size. The preform is used in a resin transfer molding process to produce a composite article. In general, the resin transfer molding process involves placing the preform in a mold, closing the mold and transferring liquid resin into the mold such that the resin infiltrates the preform. Upon curing, the resin serves as a matrix around the fibers of the preform to form a molded article.

The preform may be prefabricated and is often significantly larger than desired. On a percentage basis, the preform or portions thereof may be approximately 20% - 50% thicker than desired, though this percentage may vary depending on the design of the particular article. The preform may therefore significantly exceed the dimensions of the mold such that the enclosure of the preform in the mold could crush or otherwise damage the preform by altering the orientations of the fibers or producing fiber wrinkling and discontinuities. The disclosed examples provide a method for debulking the preform to reduce its size to be closer to the size of the mold and thereby reduce or eliminate damage to the preform upon enclosure in the mold.

Traditional two-dimensional fiber structures that are made up of a stack of plies or sheets are readily debulked by applying a tackifier powder or resin solution between the plies. In comparison, however, since a three-dimensional fiber preform does not include laid-up plies between which a tackifying material can be deposited, the same technique that is used for two-dimensional plies or sheets is not applicable to three-dimensional fiber preforms. Moreover, because of the more complex fiber network of the three-dimensional fiber preforms, there is generally a greater possibility that any mishandling of the preform could disturb the fibers to the detriment of the final article.

Figure 1 shows an example method 20 of dubulking a three-dimensional fiber preform to reduce the preform from a first size to a second, smaller size. In general, the method includes an infiltration step 22, a distribution step 24, a removal step 26, and a compression step 28.

The infiltration step 22 may include infiltrating the preform with a solvent. The selection of the solvent may depend on the preform. For instance, the fibers of the preform may include a sizing or resin coating on the fiber surfaces. The sizing is present to facilitate the weaving and handling of the preform from the individual fibers. In this case, a suitable solvent, such as water, may be infiltrated into the preform to at least partially dissolve the sizing on the fibers and redistribute the sizing on the fiber surfaces for function as a tackifier material. In that regard, the sizing, once redistributed, is considered to be tackifier material. The sizing may be or may be comprised of an epoxy material that is soluble within water or other polar solvent.

In another example, the preform may be made of dry fibers or may include fibers having dry portions that are substantially free of any sizing or tackifier material. In this case, the infiltration step 22 may be preceded by the preparation of a mixture of the solvent with a tackifier material. For example, a tackifier material, such as an epoxy material, may be mixed with a suitable solvent to form a solution of the solvent and the tackifier material. The solvent may be water, acetone, methyl-ethyl-ketone, ethanol, or mixtures thereof in which the epoxy or other type of selected tackifier material readily dissolves.

In embodiments, the solvent/tackifier solution (or mixture) includes 1-5 wt.% of the tackifier material. In a further example, the solvent/tackifier solution may include approximately 3 wt.% of the tackifier material.

The user then infiltrates the solvent/tackifier solution into the preform. As an example, the infiltration may include submerging at least a portion of the preform in the solvent/tackifier solution. In the distribution step 24, the preform may be held within the solvent/tackifier solution (or the solvent without the tackifier material if the fibers include the sizing) for a suitable amount of time, such as 15 minutes, to allow the solvent/tackifier solution to penetrate between all the fibers to distribute the tackifier material. The amount of time may vary, depending on the geometry of the preform, viscosity of the solvent/tackifier solution or other factors. In the case where the fiber include the sizing, the solvent distributes or redistributes the sizing on the fiber surfaces.

After infiltration and distribution, the solvent or solution is substantially removed from the preform in the removal step 26. For instance, the preform may be removed from the solvent or solvent/tackifier solution and excess solvent or solvent/tackifier solution may be allowed to run off from the preform. The preform may be further dried at an elevated temperature to remove substantially all of the solvent.

In one example, the preform is dried under vacuum, such as in a vacuum bag under 28 inches of mercury, at a temperature of approximately 121°C (250°F) for a period ranging from a few minutes to approximately 24 hours. Upon removal of the solvent, the tackifier material (or sizing) that was dissolved within the solvent remains on the fiber surfaces as tackifer. The solvent, especially water, also acts as a lubricant to allow the fibers of the preform to move relative to each other such that under the 1 atmosphere (14.7 psi) pressure exerted by the vacuum bag the preform is compressed without substantially disturbing the fiber orientation.

In the compression step 28, a user applies a compression force to the preform such that, upon cooling and removal of the compression force, the tackifier material that was distributed on the fiber surfaces using the solvent causes the preform to substantially remain at the compressed, smaller size. As an example, the preform maintains the smaller size, even several days after the debulking.

The preform may be compressed in a suitable tool that is designed for the shape of the preform. Additionally, the compression force may be applied at an elevated temperature above 20°C (68°F), such as 160°F (71°C), to soften the tackifier material and allow the fibers of the preform to move relative to each other. As an example, the compression force may be up to approximately 500 pounds per square inch and in some examples is in the range of 50-200 pounds per square inch. Upon cooling of the preform, the tackifier material solidifies and holds the preform at the smaller size. A user may apply the compressive force for a suitable time to allow the fibers to move. For instance, the time may be approximately one hour under the compressive force and elevated temperature.

In the above examples, the amount of sizing on the fibers of the preform prior to infiltration or, alternatively, the amount of tackifier material deposited onto the dry fibers of the preform, does not exceed approximately 5 wt.% of the combined weight of the tackifier material (or sizing) and the fibers. In another example, if the tackifier/solvent solution is used to infiltrate fibers that have sizing, the combined amount of the sizing and tackifier material does not exceed 5 wt.%. In embodiments, an amount of tackifier material and/or sizing of approximately 3 wt.% is suitable to hold the preform at the smaller size upon cooling yet does not substantially clog the void space between the fibers to impede the transfer of the resin into the preform during the resin transfer molding process.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A method of debulking a fiber preform, comprising:
debulking a three-dimensional fiber preform from a first size to a second, smaller size, wherein the preform comprises fibers which are interwoven to form fiber sheets that are bundled to one another by transverse fibers to provide a three-dimensional fiber network;
the method comprising:
infiltrating a three-dimensional fiber preform with a solvent;
using the solvent to distribute a tackifier material within the three-dimensional fiber preform;
removing the solvent from the three-dimensional fiber preform; and
then compressing the three-dimensional fiber preform to the smaller size such that, upon release of the compression, the tackifier material causes the three-dimensional fiber preform to substantially remain at the smaller size.

2. The method as recited in claim 1, wherein the infiltrating of the three-dimensional fiber preform includes submerging at least a portion of the three-dimensional fiber preform in the solvent.

3. The method as recited in claim 1 or 2, wherein the solvent is selected from a group consisting of water, acetone, methyl-ethyl-ketone, ethanol, and mixtures thereof.

4. The method as recited in claim 1, 2 or 3, wherein the tackifier material comprises epoxy.

5. The method as recited in any of claims 1 to 4, further comprising, prior to the infiltrating, preparing the solvent as a mixture with the tackifier material such that infiltration of the solvent into the three-dimensional fiber preform infuses the preform with the tackifier material.

6. The method as recited in claim 5, wherein the mixture includes 1-5 wt.% of the tackifier material.

7. The method as recited in any of claims 1 to 5, wherein the tackifier material is present within the three-dimensional fiber preform prior to the infiltrating of the solvent.

8. The method as recited in any of claims 1 to 6, wherein the three-dimensional fiber preform, prior to the infiltrating with the solvent, contains dry fibers with regard to any tackifier material.

9. The method as recited in any of claims 1 to 8, wherein the compressing of the three-dimensional fiber preform is conducted at a temperature that is greater than 20°C (68°F).

## Patentansprüche

1. Verfahren zur Verdichtung einer Faservorform, das Folgendes umfasst:
Verdichtung einer dreidimensionalen Faservorform von einer ersten Größe zu einer zweiten, kleineren Größe, wobei die Vorform Fasern umfasst, die miteinander verwoben sind, um Faserschichten zu bilden, die durch quer verlaufende Fasern aneinander gebündelt sind, um ein dreidimensionales Fasernetzwerk bereitzustellen;
wobei das Verfahren Folgendes umfasst:
Infiltrieren einer dreidimensionalen Faservorform mit einem Lösungsmittel;
Verwenden des Lösungsmittels, um ein klebrig machendes Material innerhalb der dreidimensionalen Faservorform zu verteilen;
Entfernen des Lösungsmittels von der dreidimensionalen Faservorform; und
danach Komprimieren der dreidimensionalen Faservorform zu der kleineren Größe, sodass nach Beenden der Kompression das klebrig machende Material die dreidimensionale Faservorform dazu veranlasst, im Wesentlichen in der kleineren Größe zu verbleiben.

2. Verfahren nach Anspruch 1, wobei das Infiltrieren der dreidimensionalen Faservorform das Eintauchen mindestens eines Abschnitts der dreidimensionalen Faservorform in das Lösungsmittel einschließt.

3. Verfahren nach Anspruch 1 oder 2, wobei das Lösungsmittel aus einer Gruppe ausgewählt ist, die aus Wasser, Aceton, Methyl-Ethyl-Keton, Ethanol und Mischungen davon besteht.

4. Verfahren nach Anspruch 1, 2 oder 3, wobei das klebrig machende Material Epoxid umfasst.

5. Verfahren nach einem der Ansprüche 1 bis 4, das ferner vor dem Infiltrieren das Herstellen des Lösungsmittels als eine Mischung mit dem klebrig machenden Material einschließt, sodass die Infiltration des Lösungsmittels in die dreidimensionale Faservorform die Vorform mit dem klebrig machenden Material durchtränkt.

6. Verfahren nach Anspruch 5, wobei die Mischung 1 - 5 Gew.-% des klebrig machenden Materials einschließt.

7. Verfahren nach einem der Ansprüche 1 bis 5, wobei das klebrig machende Material innerhalb der dreidimensionalen Faservorform vor dem Infiltrieren des Lösungsmittels vorhanden ist.

8. Verfahren nach einem der Ansprüche 1 bis 6, wobei die dreidimensionale Faservorform vor dem Infiltrieren mit dem Lösungsmittel hinsichtlich eines beliebigen klebrig machenden Materials trockene Fasern enthält.

9. Verfahren nach einem der Ansprüche 1 bis 8, wobei das Komprimieren der dreidimensionalen Faservorform bei einer Temperatur durchgeführt wird, die mehr als 20 °C (68 °F) beträgt.

## Revendications

1. Procédé de réduction de volume d'une préforme de fibre, comprenant :
la réduction de volume d'une préforme de fibre en trois dimensions d'une première taille à une seconde taille inférieure, dans lequel la préforme comprend des fibres qui sont entremêlées pour former des feuilles de fibres qui sont regroupées les unes aux autres par des fibres transversales pour fournir un réseau de fibres en trois dimensions ;
le procédé comprenant :
l'infiltration d'une préforme de fibre en trois dimensions avec un solvant ;
l'utilisation du solvant pour répartir un matériau poisseux à l'intérieur de la préforme de fibre en trois dimensions ;
le retrait du solvant de la préforme de fibre en trois dimensions ; et
ensuite la compression de la préforme de fibre en trois dimensions à la taille inférieure de telle sorte que, après relâchement de la compression, le matériau poisseux a pour effet que la préforme de fibre en trois dimensions reste sensiblement à la taille inférieure.

2. Procédé selon la revendication 1, dans lequel l'infiltration de la préforme de fibre en trois dimensions comprend l'immersion d'au moins une portion de la préforme de fibre en trois dimensions dans le solvant.

3. Procédé selon la revendication 1 ou 2, dans lequel le solvant est sélectionné parmi un groupe composé d'eau, d'acétone, de méthyléthylcétone, d'éthanol, et de mélanges de ceux-ci.

4. Procédé selon la revendication 1, 2 ou 3, dans lequel le matériau poisseux comprend de la résine époxy.

5. Procédé selon l'une quelconque des revendications 1 à 4, comprenant en outre, avant l'infiltration, la préparation du solvant sous forme de mélange avec le matériau poisseux de telle sorte que l'infiltration du solvant dans la préforme de fibre en trois dimensions fait pénétrer le matériau poisseux dans la préforme.

6. Procédé selon la revendication 5, dans lequel le mélange comprend 1 à 5 % en poids du matériau poisseux.

7. Procédé selon l'une quelconque des revendications 1 à 5, dans lequel le matériau poisseux est présent à l'intérieur de la préforme de fibre en trois dimensions avant l'infiltration du solvant.

8. Procédé selon l'une quelconque des revendications 1 à 6, dans lequel la préforme de fibre en trois dimensions, avant l'infiltration avec le solvant, contient des fibres sèches par rapport à n'importe quel matériau poisseux.

9. Procédé selon l'une quelconque des revendications 1 à 8, dans lequel la compression de la préforme de fibre en trois dimensions est conduite à une température supérieure à 20 °C (68 °F).
